(19) Europäisches Patentamt

European Patent Office

Office européen des brevets

(11) **EP 0 931 413 B1**

(12) **EUROPÄISCHE PATENTSCHRIFT**

(45) Veröffentlichungstag und Bekanntmachung des Hinweises auf die Patenterteilung:
**12.03.2003 Patentblatt 2003/11**

(21) Anmeldenummer: **97938777.6**

(22) Anmeldetag: **16.08.1997**

(51) Int Cl.7: **H04N 1/60**

(86) Internationale Anmeldenummer:
**PCT/DE97/01758**

(87) Internationale Veröffentlichungsnummer:
**WO 98/016057 (16.04.1998 Gazette 1998/15)**

(54) **VERFAHREN ZUR INTERPOLATION IN EINEM N-DIMENSIONALEN FARBRAUM**

METHOD OF INTERPOLATION IN AN N-DIMENSIONAL COLOUR SPACE

METHODE D'INTERPOLATION DANS UN ESPACE CHROMATIQUE N-DIMENSIONNEL

(84) Benannte Vertragsstaaten:
**BE DE FR GB IT NL**

(30) Priorität: **10.10.1996 DE 19641822**

(43) Veröffentlichungstag der Anmeldung:
**28.07.1999 Patentblatt 1999/30**

(73) Patentinhaber: **Heidelberger Druckmaschinen Aktiengesellschaft**
**69115 Heidelberg (DE)**

(72) Erfinder: **KRABBENHÖFT, Uwe-Jens**
**D-24107 Kiel (DE)**

(56) Entgegenhaltungen:
**GB-A- 2 053 619          US-A- 5 504 821**

**Beschreibung**

Die Erfindung bezieht sich auf das Gebiet der elektronischen Reproduktionstechnik und betrifft ein Verfahren zur Interpolation von Farbwerten für die Farbraumtransformation von einem Eingangs-Farbraum in einen Ausgangs-Farbraum.

In der Reproduktionstechnik werden Druckvorlagen für Druckseiten erzeugt, die alle zu druckenden Elemente wie Texte, Grafiken und Bilder enthalten. Im Fall der elektronischen Herstellung der Druckvorlagen liegen diese Elemente in Form von digitalen Daten vor. Für ein Bild werden die Daten z.B. erzeugt, indem das Bild in einem Scanner punkt- und zeilenweise abgetastet wird, jeder Bildpunkt in Farbkomponenten zerlegt wird und die Farbkomponenten digitalisiert werden. Üblicherweise werden Bilder in einem Scanner in die Farbkomponenten Rot, Grün und Blau (R, G, B) zerlegt, also in die Komponenten eines dreidimensionalen Farbraums. Für den farbigen Druck werden jedoch andere Farbkomponenten benötigt. Beim Vierfarbdruck sind das die Druckfarben Cyan, Magenta, Gelb und Schwarz (C, M, Y, K), also die Komponenten eines vierdimensionalen Farbraums. In Sonderfällen wie dem Verpackungsdruck können noch weitere Druckfarben hinzukommen, z.B. Gold, Silber, Schokoladen-Braun, usw. Für Drucke mit besonders hoher Qualität (High Fidelity Printing) werden z.B. sieben Druckfarben verwendet (C, M, Y, K, R, G, B), d.h. die Bilddaten müssen in einen siebendimensionalen Farbraum transformiert werden.

Solche Farbraumtransformationen werden in der Reproduktionstechnik benötigt, weil es für verschiedene Geräte wie Scanner, Monitor, Proofausgabe, Druckmaschine usw. unterschiedliche Farbräume gibt, die die Farbeigenschaften des Geräts jeweils optimal beschreiben. Alle Geräte haben ihre Einschränkungen und Besonderheiten bei der Darstellung der Farben, und alle Geräte haben verschiedene solche Eigenschaften. Mit einer Farbraumtransformation werden die Farbkomponenten der verschiedenen Farbräume einander zugeordnet, daß z.B. die RGB-Farbwerte, die ein Scanner ermittelt hat, so in die CMYK-Farbwerte eines Druckverfahrens umgerechnet werden, daß der Druck die gleichen Farben hat wie das Bildoriginal.

Eine solche Zuordnung kann mit Hilfe eines Tabellenspeichers (Look-up Tabelle) realisiert werden. Wenn z. B. RGB-Farbwerte in CMYK-Farbwerte transformiert werden sollen, muß der Tabellenspeicher für jede mögliche Wertekombination der RGB-Farbkomponenten einen Speicherplatz haben, in dem die zugeordneten CMYK-Farbkomponenten gespeichert sind. Ein RGB-Bild wird dann in den CMYK-Farbraum transformiert, indem die RGB-Farbwerte jedes Bildpunkts als Adresse an den Tabellenspeicher angelegt werden und die zugeordneten CMYK-Farbwerte ausgelesen werden. Dieses einfache Zuordnungsverfahren hat jedoch den Nachteil, daß der Tabellenspeicher sehr groß und damit teuer werden kann. Wenn jede der RGB-Komponenten mit 8 Bit digitalisiert wurde, d.h. $2^8 = 256$ Dichtestufen hat, gibt es $256^3 = 16.777.216$ mögliche Wertekombinationen der RGB-Farbkomponenten. Der Tabellenspeicher muß also 16.777.216 Speicherzellen mit je 4 Byte Wortlänge (je ein Byte für C, M, Y, K) haben. Damit wird der Tabellenspeicher 64 MByte groß.

Um die Größe des Tabellenspeichers zu reduzieren, wird nach dem Stand der Technik eine Kombination von Tabellenspeicher und Interpolationsverfahren zur Realisierung einer Farbraumtransformation eingesetzt. In dem Tabellenspeicher sind dann nicht die Zuordnungen für alle möglichen Wertekombinationen der Eingangs-Farbkomponenten gespeichert, sondern nur noch für ein gröberes, regelmäßiges Gitter von Werten im Eingangsfarbraum. Das Gitter wird gebildet, indem in jeder Komponentenrichtung nur jeder k-te Wert als Gitterpunkt genommen wird. Für das Beispiel des RGB-Farbraums und für k = 8 wird also in jeder Komponente jeder achte Wert von den 256 möglichen Werten als Gitterpunkt genommen. Das Gitter hat demnach in jeder Komponentenrichtung 256/8 = 32 Gitterpunkte, d.h. für den gesamten Farbraum 32 × 32 × 32 = 32.768 Gitterpunkte. Für jeden Gitterpunkt werden die zugeordneten Komponenten des Ausgangsfarbraums (z.B. CMYK) in dem Tabellenspeicher als Stützwerte gespeichert. Für Eingangsfarbwerte, die zwischen den Gitterpunkten liegen, werden die Ausgangswerte aus den benachbarten Stützwerten interpoliert.

Die nach dem Stand der Technik bekannten Interpolationsverfahren für die Farbraumtransformation sind in der Regel auf dreidimensionale Eingangs-Farbräume, wie z.B. den RGB-Farbraum, beschränkt. Sie können nicht auf einen vier- oder mehrdimensionalen Eingangs-Farbraum, wie z.B. den CMYK-Farbraum oder den siebendimensionalen CMYKRGB-Farbraum, angewendet werden, oder sie erfordern bei einer Erweiterung auf mehr als drei Dimensionen sehr viel mehr Aufwand bzw. Rechenzeit.

In der EP-OS 0 487 304 werden alle 8 Eckpunkte eines Unterwürfels im dreidimensionalen L*a*b*-Farbraum zur Interpolation verwendet. In der EP-OS 0 615 379 werden die Farbwerte ebenfalls aus allen 8 Eckpunkten eines Unterraums im RGB-Farbraum interpoliert, wobei die Gitterpunkte jedoch nicht äquidistant sind, d.h. der Unterraum ist nicht würfelförmig.

In der DE-PS 28 13 519 wird der würfelförmige Unterraum in 5, 6 oder 24 Tetraeder aufgeteilt, aus den Abständen des zu interpolierenden Punktes P zu den Seiten des Unterwürfels wird ermittelt, in welchem Tetraeder der Punkt P liegt, und dann der Farbwert aus den vier Eckpunkten dieses Tetraeders interpoliert.

In der DE-OS 42 34 985 wird der Unterwürfel des dreidimensionalen Eingangs-Farbraums ebenfalls in 6 Tetraeder aufgeteilt und dann die vier Eckpunkte eines Tetraeders interpoliert.

In der US-PS 5,428,465 wird jeder Unterwürfel im RGB-Farbraum durch eine diagonale Trennebene in zwei Prismen mit je 6 Eckpunkten aufgeteilt und die Farbwerte im Inneren eines Prismas aus den 6 Eckpunkten interpoliert. In gleicher Weise werden in der US-PS 5,504,821 die Unterwürfel eines dreidimensionalen Farbraums mit einer Luminanzkomponente und zwei Farbdifferenzkomponenten in zwei Prismen mit je 6 Eckpunkten aufgeteilt und die Farbwerte innerhalb eines Prismas aus allen 6 Eckpunkten interpoliert.

In der GB-OS 2 053 619 werden die Unterwürfel in drei Pyramiden mit jeweils 5 Eckpunkten aufgeteilt und die Farbwerte innerhalb einer Pyramide aus den Eckpunkten interpoliert.

In der US-PS 5,313,314 wird ein vierdimensionaler "Unterwürfel" mit 16 Eckpunkten in 24 Teilkörper mit je 5 Eckpunkten aufgeteilt und dann die 5 Eckpunkte des Teilkörpers interpoliert.

In der EP-PS 0 533 712 wird eine allgemeine Transformation von einem n-dimensionalen in einen m-dimensionalen Farbraum beschrieben, wobei die Komponenten des Eingangs-Farbraums durch Vorverarbeitung auf einen dreidimensionalen Farbraum abgebildet werden und so die allgemeine n-dimensionale Transformation auf eine dreidimensionale Transformation zurückgeführt wird.

Der überwiegende Teil der bekannten Interpolationsverfahren für Farbraumtransformationen ist auf einen dreidimensionalen Eingangs-Farbraum beschränkt, in dem ein Unterwürfel in eine Anzahl von Teilkörpern aufgeteilt wird. Dazu werden die Komponenten eines zu interpolierenden Farbwertes in Vielfache der Kantenlänge eines Unterwürfels und Restwerte aufgeteilt. In der Regel gibt eine Anzahl höherwertiger Bits der Komponenten die Vielfachwerte an und die übrigen niedrigwertigen Bits die Restwerte. Die Vielfachwerte der Komponenten bestimmen, in welchem Unterwürfel der zu interpolierende Farbwert liegt. Die Restwerte bestimmen weiter, in welchem Teilkörper des Unterwürfels der zu interpolierende Farbwert liegt. Durch umfangreiche Vergleichsoperationen der Restwerte wird festgestellt, in welchem Teilkörper der zu interpolierende Punkt P liegt, durch eine Adreßrechnung werden die Eckpunkte des Teilkörpers ermittelt und die entsprechenden Stützwerte aus einem dreidimensionalen Gitter-Tabellenspeicher ausgelesen und interpoliert. Die Verfahren sind aufwendig und mit einer großen Zahl von Rechenoperationen für jeden zu interpolierenden Farbwert eines Bildpunktes verbunden. Eine Erweiterung dieser Verfahren auf mehr als drei Dimensionen ist entweder nicht möglich oder wird so aufwendig, daß eine Anwendung nicht wirtschaftlich ist.

Es ist daher die Aufgabe der vorliegenden Erfindung, die zuvor genannten Einschränkungen und Nachteile zu vermeiden und ein Verfahren zur Interpolation von Farbwerten für die Farbraumtransformation von einem Eingangs-Farbraum in einen Ausgangs-Farbraum anzugeben, mit dem Farbräume mit einer beliebigen Anzahl von Dimensionen ineinander transformiert werden können. Weiterhin soll das erfindungsgemäße Verfahren ohne Aufteilung von Unterwürfeln eines Farbraums in komplexe Teilkörper auskommen, und ebenso ohne die in den bekannten Verfahren verwendete Bestimmung der Teilkörper durch die Restwerte. Schließlich soll für das erfindungsgemäße Verfahren der Berechnungsaufwand bei mehr als drei Dimensionen nur unwesentlich größer werden.

Diese Aufgabe wird durch die Merkmale des Anspruchs 1 gelöst. Vorteilhafte Weiterbildungen sind in den Unteransprüchen angegeben.

Die Erfindung wird nachfolgend anhand der Figuren 1 bis 8 näher beschrieben.

Es zeigen:

Fig. 1    einen dreidimensionalen RGB-Farbraum mit einem Unterwürfel, in dem ein zu interpolierender Punkt P liegt (Stand der Technik),

Fig. 2    ein Blockdiagramm für eine Farbraumtransformation von RGB auf CMYK mit einem Gitter-Tabellenspeicher und einer Interpolation der Gitterpunkte (Stand der Technik),

Fig. 3    ein Blockdiagramm für eine Farbraumtransformation von n Dimensionen auf m Dimensionen mit einem Gitter-Tabellenspeicher und einer Interpolation der Gitterpunkte,

Fig. 4    einen zweidimensionalen Farbraum mit Gitterpunkten und Stützwerten an den Gitterpunkten,

Fig. 5    einen zweidimensionalen Farbraum mit Gitterpunkten und Interpolationsebenen, die zwischen jeweils drei Stützwerten aufgespannt sind,

Fig. 6    die Interpolation auf einer ersten Interpolationsebene in einem Unterquadrat des zweidimensionalen Farbraums,

Fig. 7    die Interpolation auf einer zweiten Interpolationsebene in einem Unterquadrat des zweidimensionalen Farbraums,

Fig. 8    ein Ablaufdiagramm für die Interpolationsvorschrift im zweidimensionalen Farbraum und

Fig. 9    ein Ablaufdiagramm für die Interpolationsvorschrift im n-dimensionalen Farbraum.

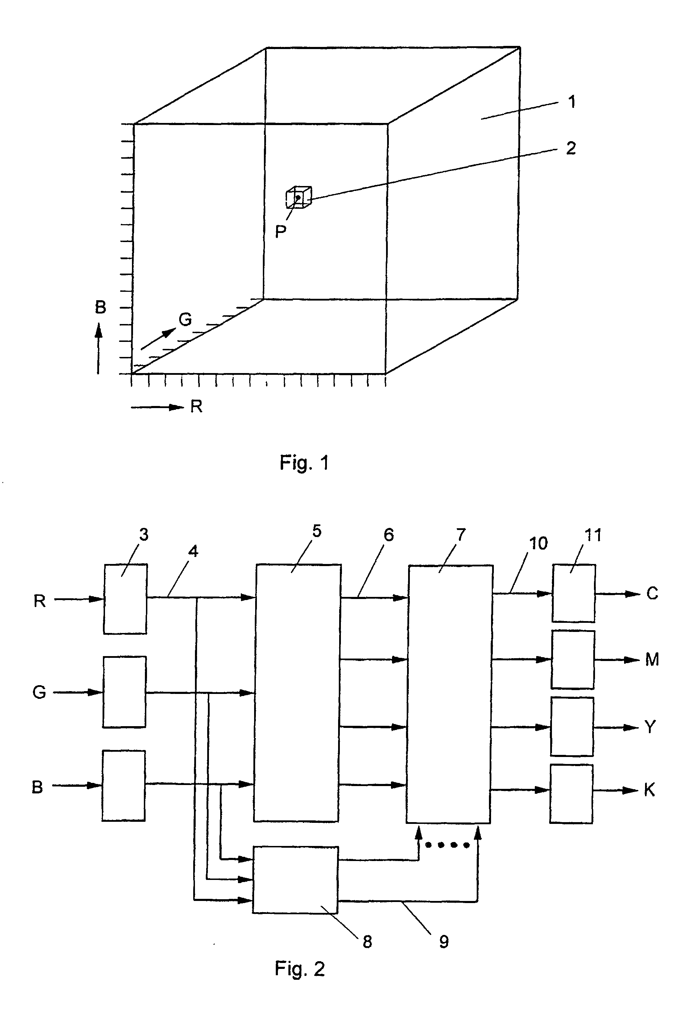

Fig. 1 zeigt als Beispiel für einen Eingangs-Farbraum den dreidimensionalen RGB-Farbraum, wobei die Komponentenachsen einen Würfel (1) bilden und jede Komponente in 32 Gitterpunkte aufgeteilt ist. Jeweils $2 \times 2 \times 2 = 8$ räumlich benachbarte Gitterpunkte bilden einen Unterwürfel (2), d.h. der Farbraum ist in $32 \times 32 \times 32 = 32.768$ Unterwürfel aufgeteilt. Eine RGB-Eingangsfarbe P, für die die Farbraumtransformation durchgeführt werden soll, liegt in einem Unterwürfel. Für die Gitterpunkte an den Ecken des Unterwürfels sind die transformierten Farbwerte als Stützwerte im Tabellenspeicher gespeichert. Die transformierten Farbwerte der Eingangsfarbe P werden aus diesen benachbarten Stützwerten durch Interpolation ermittelt, wobei die Interpolationskoeffizienten in geeigneter Weise aus den Abständen des Punktes P zu den Eckpunkten des Unterwürfels bestimmt werden.

Fig. 2 zeigt das prinzipielle Verfahren der Farbraumtransformation mittels Tabellenspeicher und Interpolation als Blockdiagramm, für ein Beispiel, in dem der RGB-Farbraum in den CMYK-Farbraum transformiert wird. Die RGB-Komponenten werden zunächst durch eindimensionale Eingangs-Tabellenspeicher (3) modifiziert, z.B. um sie in ihrem Wertebereich anzupassen. Wenn die RGB-Komponenten mit beispielsweise je 8 Bit digitalisiert sind, haben die Eingangs-Tabellenspeicher 256 Speicherplätze zu je 8 Bit (1 Byte). Die 8 Bit breiten Ausgangswerte (4) der Eingangs-Tabellenspeicher werden in 5 höherwertige Bits und 3 niedrigwertige Bits aufgeteilt. Aus den $3 \times 5 = 15$ höherwertigen Bits wird eine 15 Bit breite Adresse für den dreidimensionalen Gitter-Tabellenspeicher (5) gebildet, in dem die Stützwerte der $32 \times 32 \times 32 = 32.768$ Gitterpunkte gespeichert sind. Diese Adresse kennzeichnet den ersten Eckpunkt des Unterwürfels (2), in dem der zu interpolierende Punkt P liegt. Für jeden Gitterpunkt sind in dem Gitter-Tabellenspeicher vier Stützwerte (6) entsprechend den vier Komponenten des CMYK-Farbraums gespeichert und werden parallel ausgelesen. Je nach der verwendeten Interpolationsmethode werden die Stützwerte (6) weiterer oder aller Eckpunkte des Unterwürfels aus dem Gitter-Tabellenspeicher (5) ausgelesen und der Interpolationseinheit (7) zugeführt. Parallel dazu wird aus den $3 \times 3 = 9$ niedrigwertigen Bits der Ausgangswerte (4) der Eingangs-Tabellenspeicher (3) eine 9 Bit breite Adresse für den Koeffzientenspeicher (8) gebildet, aus dem die Interpolationskoeffizienten (9) ausgelesen und der Interpolationseinheit (7) zugeführt werden. Die 9 Bit breite Adresse für den Koeffizientenspeicher (8) kennzeichnet die Lage des Punktes P innerhalb des Unterwürfels (2) und damit auch seine Abstände zu den Eckpunkten des Unterwürfels. Die Interpolationseinheit (7) verknüpft die Stützwerte (6) der ausgelesenen Eckpunkte mit den Interpolationskoeffizienten (9) und berechnet interpolierte Farbwerte (10) im CMYK-Farbraum, die durch eindimensionale Ausgangs-Tabellenspeicher (11) noch in ihrem Wertebereich angepaßt werden können. Von dieser prinzipiellen Arbeitsweise sind zahlreiche Variationen möglich, je nachdem welche der Rechenschritte seriell oder parallel ausgeführt werden.

Das erfindungsgemäße Verfahren zur Interpolation von Farbwerten für eine Farbraumtransformation arbeitet mit einem Gitter-Tabellenspeicher und einer nachgeschalteten Interpolation der Gitterpunkte, wie es in Fig. 2 erläutert wurde. Das Verfahren ist jedoch auf eine beliebige Anzahl von Dimensionen des Eingangs-Farbraums und des Ausgangs-Farbraums erweitert.

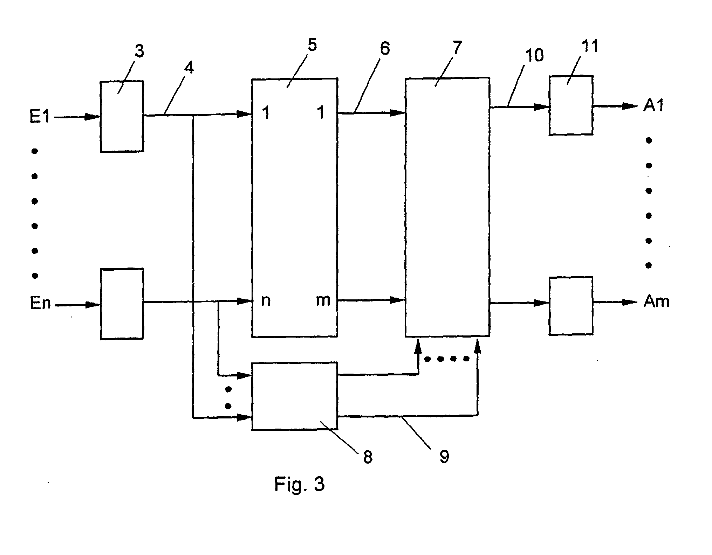

Fig. 3 zeigt ein Blockdiagramm für diesen verallgemeinerten Fall. Die Komponenten E1...En des n-dimensionalen Eingangs-Farbraums werden über Eingangs-Tabellenspeicher (3) modifiziert. Die Ausgangswerte (4) der Eingangs-Tabellenspeicher (3) werden in höherwertige und niedrigwertige Bits aufgeteilt. Die höherwertigen Bits werden zu einer Adresse für den n-dimensionalen Gitter-Tabellenspeicher (5) zusammengefaßt, in dem Stützwerte (6) für regelmäßig im n-dimensionalen Eingangs-Farbraum verteilte Gitterpunkte gespeichert sind. Jeweils 2 in jeder Komponentenrichtung benachbarte Gitterpunkte bilden einen kleinsten Unterraum mit $2^n$ Gitterpunkten als Eckpunkte. Entsprechend den m Komponenten des Ausgangs-Farbraums sind für jeden Gitterpunkt m Stützwerte gespeichert. Die niedrigwertigen Bits der Ausgangswerte (4) werden zu einer Adresse für den Koeffizientenspeicher (8) zusammengefaßt, aus dem Interpolationskoeffizienten (9) ausgelesen werden. Abhängig vom Interpolationsverfahren werden die Stützwerte mehrerer Eckpunkte eines Unterraums, in dem der zu interpolierende Punkt P liegt, aus dem Gitter-Tabellenspeicher ausgelesen und in der Interpolationseinheit (7) mit den Interpolationskoeffizienten (9) zu den interpolierten Farbwerten (10) verknüpft. Die interpolierten Farbwerte (10) aller m Ausgangskomponenten werden in den Ausgangstabellen-Speichern (11) modifiziert und dann als transformierte Farbkomponenten A1...Am des Ausgangs-Farbraums ausgegeben. Neben dieser Arbeitsweise sind zahlreiche Varianten möglich, z.B. kann die Interpolationseinheit die interpolierten Farbwerte (10) zeitlich nacheinander berechnen oder für alle m Komponenten parallel, oder die Interpolationskoeffzienten (9) werden aus den niedrigwertigen Bits der Ausgangswerte (4) berechnet und nicht aus einem Speicher ausgelesen. Die Modifizierung der Farbwerte in den Eingangs-Tabellenspeichern (3) und den Ausgangs-Tabellenspeichern (11) kann auch vorab in die abgespeicherten Stützwerte (6) eingerechnet werden, und diese Tabellenspeicher können dann entfallen. Es ist auch möglich, für jede Komponente des Ausgangs-Farbraums einen eigenen Gitter-Tabellenspeicher (5) und eine eigene Interpolationseinheit (7) vorzusehen. Alle diese Varianten ändern aber nichts an der grundsätzlichen Arbeitsweise, daß Stützwerte (6) in einem mehrdimensionalen Gitter-Tabellenspeicher (5) mit den höherwertigen Bits der Eingangs-Komponenten adressiert werden, daß aus den niedrigwertigen Bits der Eingangs-Komponenten Interpolationskoeffizienten (9) gewonnen werden, und daß Ausgangs-Farbwerte aus den Stützwerten (6) an mehreren Eckpunkten eines Unterraums interpoliert werden.

Das erfindungsgemäße Interpolationsverfahren wird zunächst am Beispiel eines zweidimensionalen Farbraums beschrieben und veranschaulicht, da es für mehr als zwei Dimensionen nicht mehr zeichnerisch dargestellt werden kann. Später wird es dann auf eine beliebige Zahl von Dimensionen des Eingangs-Farbraums erweitert Die Zahl der Dimensionen des Ausgangs-Farbraums hat keinen Einfluß auf den prinzipiellen Ablauf des Interpolationsverfahrens, da die Interpolation für jede Komponente des Ausgangs-Farbraums getrennt durchgeführt wird. Die Zahl der Ausgangs-Komponenten beeinflußt nur die Zahl der im Gitter-Tabellenspeicher gespeicherten Stützwerte je Gitterpunkt und die Zahl der parallel oder nacheinander durchzuführenden gleichartigen Interpolationen. Das erfindungsgemäße Interpolationsverfahren wird deshalb hier nur für eine Ausgangs-Komponente erläutert.

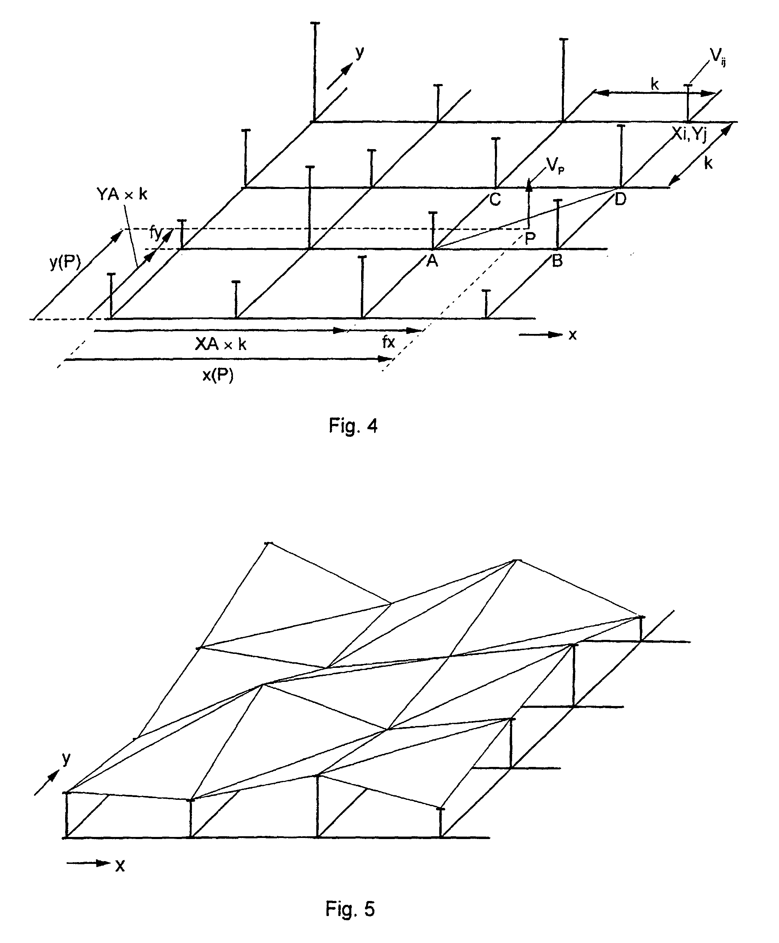

Fig. 4 zeigt einen zweidimensionalen Farbraum mit den Komponenten x und y, die in einer Ebene dargestellt sind. Der Wertebereich beider Komponenten ist in Abschnitte von jeweils k Stufen eingeteilt, nach denen jeweils ein Gitterpunkt vorgesehen ist. Wenn der gesamte Wertebereich der Komponenten z.B. 256 digitale Stufen umfaßt und k = 8 gewählt wird, ergeben sich je Komponente 256/8 = 32 Gitterpunkte. Die zweidimensionale Farbebene wird dann in $32 \times 32 = 1024$ Gitterpunkte $(X_i, Y_j)$ aufgeteilt. Jeweils $2 \times 2$ benachbarte Gitterpunkte bilden ein Unterquadrat. Es würde also ein Gitter-Tabellenspeicher (5) mit 1024 Speicherplätzen benötigt. Für jeden Gitterpunkt ist darin ein Stützwert gespeichert. Die Stützwerte sind in der Fig. 4 als Funktionswerte $V_{ij}$ unterschiedlicher Höhe dargestellt.

Für einen Eingangs-Farbwert am Punkt P mit den Komponenten x(P) und y(P) soll eine interpolierte Ausgangs-Komponente $V_P$ berechnet werden. Dazu wird zunächst das Unterquadrat (ABCD) bestimmt, in dem der zu interpolierende Punkt P liegt. Die Komponenten x(P) und y(P) werden in ein Vielfaches von k und einen Restwert aufgespalten:

$$x(P) = XA \times k + fx \tag{1a}$$

$$y(P) = YA \times k + fy \tag{1b}$$

Die Vielfachwerte XA und YA kennzeichnen den Gitterpunkt A im Unterquadrat (ABCD), die Restwerte fx und fy kennzeichnen die Lage des Punkts P innerhalb des Unterquadrats (ABCD). Die Vielfachwerte XA und YA können z.B. aus den höherwertigen Bits der Komponenten x(P) und y(P) gewonnen werden, und die Restwerte fx und fy aus den niedrigwertigen Bits dieser Komponenten. In dem obigen Beispiel mit k = 8 und 256 Stufen je Komponente entsprechen die 5 höherwertigen Bits von x(P) und y(P) den Vielfachwerten XA und YA, und die 3 niedrigwertigen Bits entsprechen den Restwerte fx und fy.

Die Adresse des Gitterpunkts A im Gitter-Tabellenspeicher (5) ergibt sich aus den Vielfachwerten XA und YA aufgrund einer Adreßberechnung, die von der Speicherorganisation abhängt. Nach einer gebräuchlichen Speicherorganisation und für das obige Beispiel von 32 Gitterpunkten je Komponente sind z.B. die Gitterpunkte auf der x-Achse den Speicheradressen 0...31 zugeordnet, die Gitterpunkte, die parallel dazu im y-Abstand von k Stufen liegen, sind den Speicheradressen 32...63 zugeordnet, die Gitterpunkte im y-Abstand von $2 \times k$ Stufen den Speicheradressen 64... 95, usw. Bei dieser Speicherorganisation ergeben sich die Adressen der Eckpunkte des Unterquadrats (ABCD) aus:

$$\text{Adresse A} = YA \times 32 + XA \tag{2a}$$

$$\text{Adresse B} = YA \times 32 + (XA + 1) \tag{2b}$$

$$\text{Adresse C} = (YA + 1) \times 32 + XA \tag{2c}$$

$$\text{Adresse D} = (YA + 1) \times 32 + (XA + 1) \tag{2d}$$

Die Adressen aller Eckpunkte des Unterquadrats (ABCD) können also in einfacher Weise aus den Vielfachwerten XA und YA berechnet werden.

Zur Berechnung des interpolierten Ausgangswerts $V_P$ wird erfindungsgemäß ein in x- und y-Richtung lineares Interpolationsverfahren verwendet. Dazu wird das Unterquadrat (ABCD) durch eine diagonale Trennlinie in zwei Dreiecke (ABD) und (ACD) aufgeteilt, und zwischen den Stützwerten an den Eckpunkten der Dreiecke wird jeweils eine Interpolationsebene aufgespannt.

Fig. 5 zeigt die dreieckförmigen Interpolationsebenen zwischen den Stützwerten. Je nachdem der Punkt P in dem Dreieck (ABD) oder in dem Dreieck (ACD) liegt, wird der Ausgangswert $V_P$ in der entsprechenden Interpolationsebene interpoliert.

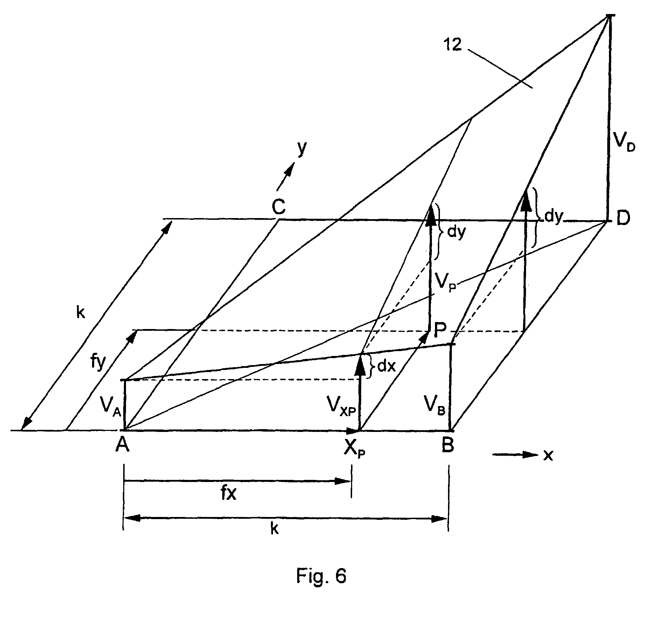

Fig. 6 veranschaulicht die Berechnung des Ausgangswerts $V_P$ für den Fall, daß der Punkt P im Dreieck (ABD) liegt. Zwischen den Stützwerten $V_A, V_B$ und $V_D$ ist die Interpolationsebene (12) aufgespannt. Die Lage des Punktes P bezogen auf den Eckpunkt A ist durch die Restwerte fx und fy bestimmt. Zunächst wird in x-Richtung im Abstand fx vom Punkt A aus, d.h. am Punkt $X_P$, ein Zwischenwert $V_{XP}$ interpoliert. Dann wird vom Punkt $X_P$ aus in y-Richtung im Abstand fy der Ausgangswert Vp interpoliert. Wie aus der Fig. 6 ersichtlich ist, gelten die Beziehungen:

$$V_{XP} = V_A + dx \tag{3a}$$

$$V_P = V_{XP} + dy = V_A + dx + dy \tag{3b}$$

Der Deltawert dx ergibt sich aus den Stützwerten $V_A$ und $V_B$ und aus dem Verhältnis von fx zu k:

$$dx = (V_B - V_A) \times fx/k \tag{4}$$

Für den Deltawert dy gilt, daß er auf der Linie $X_P$...P den gleichen Wert hat wie auf der Linie B...D, da die Interpolationsebene (12) in y-Richtung überall die gleiche Steigung hat. Deshalb ergibt sich dy zu:

$$dy = (V_D - V_B) \times fy/k \tag{5}$$

Nach dem Einsetzen der Beziehungen (4) und (5) in die Beziehung (3b) erhält man für den interpolierten Ausgangswert $V_P$:

$$V_P = 1/k \times \{V_A \times k + (V_B - V_A) \times fx + (V_D - V_B) \times fy\} \tag{6a}$$

$$V_P = 1/k \times \{V_A \times (k - fx) + V_B \times (fx - fy) + V_D \times fy\} \tag{6b}$$

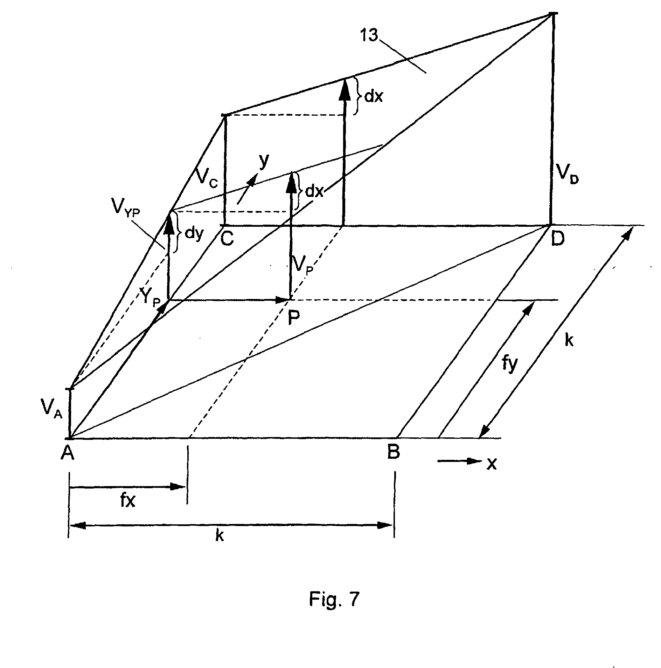

Fig. 7 zeigt die Berechnung des interpolierten Ausgangswerts $V_P$ für den Fall, daß der Punkt P im Dreieck (ACD) liegt, d.h. die Interpolation auf der Interpolationsebene (13) erfolgt. Dann wird zunächst in y-Richtung im Abstand fy, d.h. am Punkt $Y_P$, ein Zwischenwert $V_{YP}$ interpoliert, und danach wird von $Y_P$ aus in x-Richtung im Abstand fx der Ausgangswert $V_P$ interpoliert. In diesem Fall ergibt sich $V_P$ zu:

$$V_P = V_A + dy + dx \tag{7}$$

Für die Deltawerte dy und dx gilt:

$$dy = (V_C - V_A) \times fy/k \tag{8a}$$

$$dx = (V_D - V_C) \times fx/k \tag{8b}$$

Auch in diesem Fall kann der Deltawert dx auf der Linie C...D berechnet und dann auf die Linie $Y_P$...P übertragen werden, da die Steigung der Interpolationsebene (13) in x-Richtung überall gleich ist. Durch Einsetzen der Beziehungen (8a) und (8b) in die Beziehung (7) erhält man für den interpolierten Ausgangswert $V_P$:

$$V_P = 1/k \times \{V_A \times k + (V_C - V_A) \times fy + (V_D - V_C) \times fx\} \tag{9a}$$

$$V_P = 1/k \times \{V_A \times (k-fy) + V_C \times (fy - fx) + V_D \times f_X\} \tag{9b}$$

Die beiden erläuterten Fälle, daß der Punkt P im Dreieck (ABD) bzw. im Dreieck (ACD) liegt, können zu einer allgemeingültigen Interpolationsvorschrift zusammengefaßt werden. In welchem Dreieck der Punkt liegt, ist von der Größe der Restwerte fx und fy abhängig:

$$fx \geq fy\text{: P liegt im Dreieck (ABD)} \tag{10a}$$

$$fy \geq fx\text{: P liegt im Dreieck (ACD)} \tag{10b}$$

Bezeichnet man allgemein den größeren der Restwerte mit fgr und den kleineren mit fkl

$$fgr = \text{größerer Wert von (fx, fy)} \tag{11a}$$

$$fkl = \text{kleinerer Wert von (fx, fy)} \tag{11b}$$

und bezeichnet man mit $V_{gr}$ den Stützwert, der $V_A$ in Richtung von fgr benachbart ist, und mit $V_{kl}$ den Stützwert, der $V_{gr}$ in Richtung von fkl benachbart ist, so kann man die Beziehungen (6b) und (9b) zu einer Interpolationsvorschrift zusammenfassen:

$$V_P = 1 / k \times \{V_A \times (k - fgr) + V_{gr} \times (fgr - fkl) + V_{kl} \times fkl\} \tag{12}$$

Natürlich kann die Interpolationsvorschrift auch auf der Basis der Beziehungen (6a) und (9a) oder weiterer daraus durch mathematische Umformungen abgeleiteter Beziehungen formuliert werden.

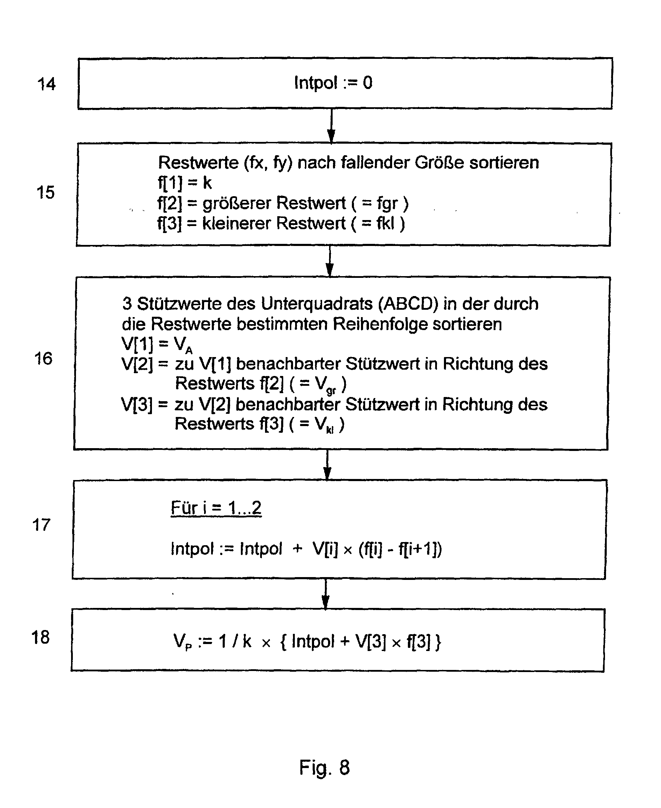

Fig. 8 zeigt diese verallgemeinerte Interpolationsvorschrift noch einmal als Ablaufdiagramm. Im ersten Schritt (14) wird eine Variable Intpol auf Null gesetzt, in der Teilwerte der Interpolation aufsummiert werden. Im Schritt (15) wird der Gitterpunktabstand k in die Position f[1] eines Arrays f[1...3] geschrieben, und die Restwerte fx und fy werden nach fallender Größe sortiert und in die beiden folgenden Positionen f[2] und f[3] des Arrays geschrieben. Im Schritt (16) werden der Stützwert $V_A$ und zwei weitere Stützwerte des Unterquadrats (ABCD) in ein Array V[1...3] geschrieben. Die Stützwerte werden dabei in der Reihenfolge sortiert, die durch die nach fallender Größe sortierten Restwerte im Array f[1...3] vorgegeben ist. In die Position V[1] wird $V_A$ geschrieben, in die Position V[2] der Stützwert, der ausgehend von V[1] in Richtung des in f[2] befindlichen Restwerts benachbart ist, und in die Position V[3] der Stützwert, der ausgehend von V[2] in Richtung des in f[3] befindlichen Restwerts benachbart ist. Der Ausdruck "in Richtung des in f[i] befindlichen Restwerts benachbart" bedeutet: in Richtung der Komponente des Farbraums, zu der der Restwert f[i] gehört. Im Schritt (17) wird eine Schleifenoperation für die Laufvariable i = 1...2 durchgeführt, d.h. in diesem Fall wird sie zweimal ausgeführt. Ein Koeffizient wird aus den Arraywerten f[i] und f[i+1] berechnet, anschließend mit dem Stützwert V[i] multipliziert und das Ergebnis zum bisherigen Wert für Intpol addiert. Im letzten Schritt (18) werden schließlich noch die letzten Werte f[3] und V[3] aus den Arrays multipliziert, zu Intpol addiert und durch k dividiert. Das Ergebnis ist der interpolierte Ausgangswert $V_P$.

Dieses allgemeine Interpolationsverfahren kann nun für einen n-dimensionalen Farbraum erweitert werden. Für einen Farbraum mit n Komponenten zu je 256 Stufen und einem Gitterpunktabstand von k Stufen erhält man ein Stützwertgitter mit $(256/k)^n$ Gitterpunkten. Ein Unterraum, in dem sich der zu interpolierende Punkt P befindet, hat dann $2^n$ Eckpunkte. Die Lage des Unterraums ergibt sich aus der Aufspaltung der Komponenten $q_s$ des Punktes P in ein Vielfaches von k und einen Restwert.

$$q_s(P) = QA_s \times k + f_s \ (s = 1...n) \tag{13}$$

Der Eckpunkt A am Ursprung des Unterraums ist durch die Vielfachwerte $QA_s$ gekennzeichnet, und die Lage des Punktes P im Unterraum ergibt sich aus den Restwerten $f_s$. Bezeichnet man die nach fallender Größe sortierten Restwerte mit $f_{g1}, f_{g2},...f_{gn}$ und die jeweils in Richtung dieser Restwerte benachbarten Stützwerte mit $V_{g1}, V_{g2},...V_{gn}$,

so kann man die Beziehung (12) auf n Dimensionen verallgemeinern:

$$V_P = 1 / k \times \{V_A \times (k - f_{g1}) + V_{g1} \times (f_{g1} - f_{g2}) + \dots\dots$$

$$+ V_{g(n-1)} \times (f_{g(n-1)} - f_{gn}) + V_{gn} \times f_{gn} \} \tag{14}$$

Die Beziehung (14) beschreibt die Interpolation auf einer Interpolations-"Ebene" im n-dimensionalen Farbraum, die durch n+1 Eckpunkte des Unterraums geht, in dem der Punkt P liegt.

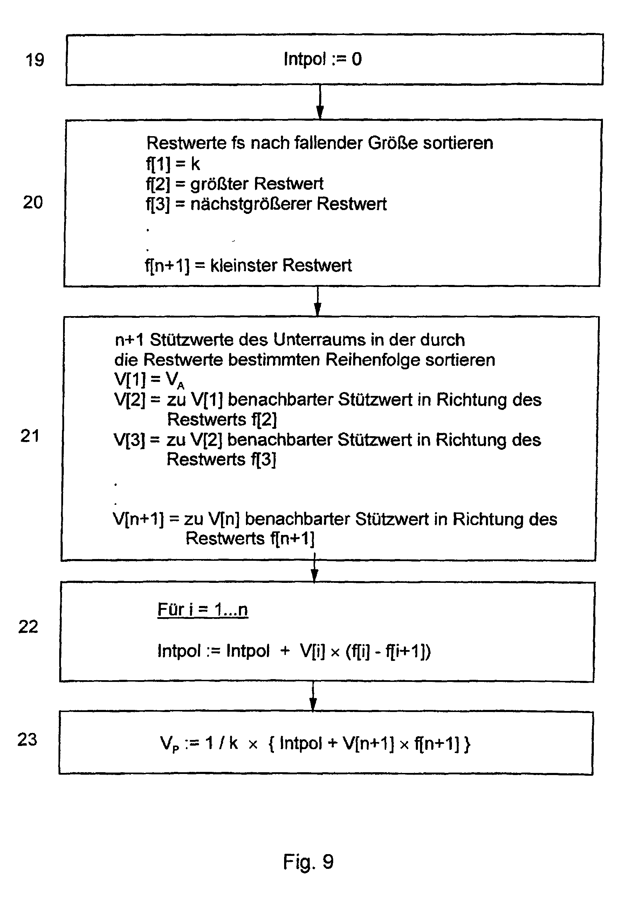

Fig. 9 zeigt die Interpolationsvorschrift für den n-dimensionalen Farbraum als Ablaufdiagramm. Im ersten Schritt (19) wird die Variable Intpol auf Null gesetzt, in der Teilwerte der Interpolation aufsummiert werden. Im Schritt (20) werden der Gitterpunktabstand k und die Restwerte $f_s$ nach fallender Größe sortiert und in ein Array f[1...n+1] geschrieben. Im Schritt (21) werden der Stützwert $V_A$ und n weitere Stützwerte des Unterraums, in dem der Punkt P liegt, in ein Array V[1...n+1] geschrieben. Die Stützwerte werden dabei in der Reihenfolge sortiert, die durch die Sortierung der Restwerte im Array f[1...n+1] vorgegeben ist. In die Position V[1] wird $V_A$ geschrieben, in die Position V[2] der Stützwert, der ausgehend von V[1] in Richtung des in f[2] befindlichen Restwerts benachbart ist, in die Position V[3] der Stützwert, der ausgehend von V[2] in Richtung des in f[3] befindlichen Restwerts benachbart ist, usw. Der Ausdruck "in Richtung des in f[i] befindlichen Restwerts benachbart" bedeutet: in Richtung der Komponente des Farbraums, zu der der Restwert f[i] gehört. Im Schritt (22) wird eine Schleifenoperation für die Laufvariable i = 1...n durchgeführt, d.h. in diesem Fall wird sie n-mal ausgeführt. Ein Koeffizient wird aus den Arraywerten f[i] und f[i+1] berechnet, anschließend mit dem Stützwert V[i] multipliziert und das Ergebnis zum bisherigen Wert für Intpol addiert. Im letzten Schritt (23) werden schließlich noch die letzten Werte f[n+1] und V[n+1] aus den Arrays multipliziert, zu Intpol addiert und durch k dividiert. Das Ergebnis ist der interpolierte Ausgangswert $V_P$.

Durch mathematische Umformung der Beziehung (14) sind weitere Varianten des Interpolationsablaufs möglich. So können die Restwerte z.B. auch nach steigender Größe sortiert werden, und die Selektion und Sortierung der Stützwerte kann mit dem Stützwert beginnen, der dem Stützwert $V_A$ im Unterraum "diagonal" gegenüber liegt, d.h. am weitesten von $V_A$ entfernt ist. Die Auswahl der Stützwerte erfolgt dann in der umgekehrten Reihenfolge, wobei als letzter Stützwert $V_A$ ausgewählt wird.

## Patentansprüche

1. Verfahren zur Interpolation von Farbwerten für die Farbraumtransformation von einem Eingangs-Farbraum in einen Ausgangs-Farbraum, wobei

   - der Eingangs-Farbraum in ein mehrdimensionales Gitter eingeteilt ist,
   - für die Gitterpunkte die transformierten Komponenten des Ausgangs-Farbraums als Stützwerte vorgegeben sind,
   - die transformierten Komponenten des Ausgangs-Farbraums für Eingangs-Farben, die zwischen den Gitterpunkten liegen, durch Interpolation der Stützwerte gewonnen werden,
   - die Komponenten einer zu interpolierenden Eingangs-Farbe in ein Vielfaches des Gitterpunktabstands und einen Restwert aufgeteilt werden, und
   - aus den Vielfachen des Gitterpunktabstands ein Unterraum ermittelt wird, in dem die zu interpolierende Eingangs-Farbe liegt und der durch jeweils benachbarte Gitterpunkte in den Komponenten des Eingangs-Farbraums begrenzt ist,

   **dadurch gekennzeichnet, dass**

   a) die Restwerte nach ihrer Größe sortiert werden,
   b) Stützwerte an den begrenzenden Gitterpunkten des Unterraums in einer Reihenfolge selektiert und sortiert werden, die durch die Reihenfolge der sortierten Restwerte bestimmt wird,
   c) aus den sortierten Restwerten Interpolationskoeffizienten gebildet werden, und
   d) die Interpolationskoeffzienten mit den sortierten Stützwerten zu interpolierten Komponenten des Ausgangs-Farbraums verknüpft werden.

2. Verfahren nach Anspruch 1, **dadurch gekennzeichnet, dass** die Zahl der Dimensionen des Eingangs-Farbraums beliebig ist.

**3.** Verfahren nach Anspruch 1, **dadurch gekennzeichnet, dass** die Zahl der Dimensionen des Ausgangs-Farbraums beliebig ist.

**4.** Verfahren nach Anspruch 1, **dadurch gekennzeichnet, dass** die Selektierung und Sortierung der Stützwerte nach den Komponentenrichtungen der sortierten Restwerte erfolgt, wobei

a) der Stützwert am Ursprung des Unterraums als erster Stützwert ausgewählt wird,
b) ausgehend vom ersten Stützwert in Richtung der Komponente, die den größten Restwert hat, der Stützwert am benachbarten Gitterpunkt als zweiter Stützwert ausgewählt wird,
c) ausgehend vom zweiten Stützwert in Richtung der Komponente, die den zweitgrößten Restwert hat, der Stützwert am benachbarten Gitterpunkt als dritter Stützwert ausgewählt wird, und so weiter bis schließlich
d) ausgehend vom vorletzten Stützwert in Richtung der Komponente, die den kleinsten Restwert hat, der Stützwert am benachbarten Gitterpunkt als letzter Stützwert ausgewählt wird.

**5.** Verfahren nach einem der Ansprüche 1 bis 4, **dadurch gekennzeichnet, dass** für die Interpolation in einem n-dimensionalen Eingangs-Farbraum n+1 Stützwerte an den begrenzenden Gitterpunkten des Unterraums ausgewählt werden.

**Claims**

**1.** Method for the interpolation of colour values for colour space transformation of an input colour space into an output colour space, wherein

- the input colour space is divided into a multidimensional grid,
- the transformed components of the output colour space are preset as support values for the grid points,
- the transformed components of the output colour space are produced for input colours located between the grid points by interpolating the support values,
- the components of an input colour to be interpolated are divided up into a multiple of the distance between the grid points and a residual value and
- from the multiple of the distance between the grid points a sub-space is established, in which the input colour to be interpolated is located and which is limited by adjacent grid points in each case in the components of the input colour space,

**characterised in that**

a) the residual values are sorted according to their size,
b) support values at the limiting grid points of the sub-space are selected and sorted in an order which is determined by the order of the sorted residual values,
c) interpolation coefficients are formed from the sorted residual values and
d) the interpolation coefficients with the sorted support values are linked to interpolated components of the output colour space.

**2.** Method according to claim 1, **characterised in that** there can be any number of dimensions of the input colour space.

**3.** Method according to claim 1, **characterised in that** there can be any number of dimensions of the output colour space.

**4.** Method according to claim 1, **characterised in that** selection and sorting of the support values is done according to the component devices of the sorted residual values, wherein

a) the support value at the origin of the sub-space is selected as the first support value,
b) starting from the first support value in the direction of the component having the largest residual value, the support value at the adjacent grid point is selected as the second support value,
c) starting from the second support value in the direction of the component having the second-largest residual value, the support value at the adjacent grid point is selected as the third support value, and so on until finally,
d) starting from the next to last support value in the direction of the component having the smallest residual value, the support value at the adjacent grid point is selected as the last support value.

**5.** Method according to one of claims 1 to 4, **characterised in that** for interpolation in an n-dimensional input colour space n+1 support values are selected at the limiting grid points of the sub-space.

## Revendications

**1.** Procédé d'interpolation de valeurs de couleurs pour la transformation d'un espace chromatique d'entrée en un espace chromatique de sortie par une transformation d'espace chromatique, selon lequel

- l'espace chromatique d'entrée est divisé en un réseau multidimensionnel,
- pour les points du réseau prédéterminants on fournit comme valeurs d'appui les composantes transformées de l'espace chromatique de sortie,
- pour les couleurs d'entrée situées entre les points du réseau les composantes transformées de l'espace chromatique de sortie sont obtenues par interpolation des points d'appui,
- les composantes d'une couleur d'entrée à interpoler sont divisées en un multiple de la distance par rapport au point du réseau et une valeur résiduelle, et
- à partir du multiple de la distance par rapport au point du réseau on détermine un sous-espace dans lequel se situe la couleur d'entrée que l'on veut interpoler et qui est délimité chaque fois par les points du réseau voisin dans les composantes de l'espace chromatique d'entrée,

**caractérisé en ce que**

a) on classe les valeurs résiduelles selon leur amplitude,
b) on sélectionne et on classe les valeurs d'appui aux points limites du réseau du sous-espace en une suite qui détermine la suite des valeurs résiduelles à classer,
c) à partir des valeurs résiduelles classées on forme des coefficients d'interpolation, et
d) on combine les coefficients d'interpolation avec les valeurs d'appui classées pour obtenir les composantes d'interpolation de l'espace chromatique de sortie.

**2.** Procédé selon la revendication 1,
**caractérisé en ce que**
le nombre de dimensions de l'espace chromatique d'entrée est quelconque.

**3.** Procédé selon la revendication 1,
**caractérisé en ce que**
le nombre des dimensions de l'espace chromatique de sortie est quelconque.

**4.** Procédé selon la revendication 1,
**caractérisé en ce que**
la sélection et le classement des valeurs d'appui se fait selon les directions des composantes des valeurs résiduelles à classer, selon lequel

a) on sélectionne comme première valeur d'appui la valeur d'appui de l'origine du sous-espace,
b) partant d'une première valeur d'appui, dans la direction de la composante ayant la plus grande valeur résiduelle, on sélectionne la valeur d'appui au point voisin du réseau comme seconde valeur d'appui,
c) partant de la seconde valeur d'appui, dans la direction de la composante ayant la seconde valeur résiduelle la plus grande, on sélectionne la valeur d'appui du point de réseau voisin comme troisième valeur d'appui, et on poursuit de la sorte jusqu'à ce que finalement
d) partant de l'avant-dernière valeur d'appui dans la direction de la composante ayant la plus petite valeur résiduelle, on sélectionne la valeur d'appui du point de réseau voisin comme dernière valeur d'appui.

**5.** Procédé selon l'une des revendications 1 à 4,
**caractérisé en ce que**
pour l'interpolation dans un espace d'entrée à n dimensions, on sélectionne n+ 1 valeurs d'appui aux points limites du réseau du sous-espace.

Fig. 1

Fig. 2

Fig. 3

Fig. 4

Fig. 5

Fig. 6

Fig. 7

| | |
|---|---|
| 14 | Intpol := 0 |

| | |
|---|---|
| 15 | Restwerte (fx, fy) nach fallender Größe sortieren<br>f[1] = k<br>f[2] = größerer Restwert ( = fgr )<br>f[3] = kleinerer Restwert ( = fkl ) |

| | |
|---|---|
| 16 | 3 Stützwerte des Unterquadrats (ABCD) in der durch die Restwerte bestimmten Reihenfolge sortieren<br>$V[1] = V_A$<br>$V[2] =$ zu V[1] benachbarter Stützwert in Richtung des Restwerts f[2] ( $= V_{gr}$ )<br>$V[3] =$ zu V[2] benachbarter Stützwert in Richtung des Restwerts f[3] ( $= V_{kl}$ ) |

| | |
|---|---|
| 17 | <u>Für i = 1...2</u><br><br>Intpol := Intpol $+$ V[i] $\times$ (f[i] - f[i+1]) |

| | |
|---|---|
| 18 | $V_P := 1 / k \times \{$ Intpol $+ V[3] \times f[3] \}$ |

Fig. 8

19 | Intpol := 0

20 | Restwerte fs nach fallender Größe sortieren
f[1] = k
f[2] = größter Restwert
f[3] = nächstgrößerer Restwert
.
.
.
f[n+1] = kleinster Restwert

21 | n+1 Stützwerte des Unterraums in der durch
die Restwerte bestimmten Reihenfolge sortieren
V[1] = $V_A$
V[2] = zu V[1] benachbarter Stützwert in Richtung des
Restwerts f[2]
V[3] = zu V[2] benachbarter Stützwert in Richtung des
Restwerts f[3]
.
.
.
V[n+1] = zu V[n] benachbarter Stützwert in Richtung des
Restwerts f[n+1]

22 | Für i = 1...n

Intpol := Intpol + V[i] × (f[i] - f[i+1])

23 | $V_P$ := 1 / k × { Intpol + V[n+1] × f[n+1] }

Fig. 9